(19) Europäisches Patentamt
European Patent Office
Office européen des brevets

(11) **EP 4 107 543 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **21705473.3**

(22) Anmeldetag: **11.02.2021**

(51) Internationale Patentklassifikation (IPC):
*G01S 7/521* (2006.01)   *G01S 15/89* (2006.01)
*G10K 11/00* (2006.01)

(52) Gemeinsame Patentklassifikation (CPC):
**B06B 1/0637; G01S 7/521; G10K 11/008;**
G10K 2200/11

(86) Internationale Anmeldenummer:
**PCT/EP2021/053379**

(87) Internationale Veröffentlichungsnummer:
**WO 2021/165146 (26.08.2021 Gazette 2021/34)**

(54) **WASSERSCHALLWANDLER**

WATERBORNE SOUND TRANSDUCER

TRANSDUCTEUR ACOUSTIQUE EN MILIEU AQUEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2020 DE 102020202275**

(43) Veröffentlichungstag der Anmeldung:
**28.12.2022 Patentblatt 2022/52**

(73) Patentinhaber:
• **ATLAS ELEKTRONIK GmbH**
  **28309 Bremen (DE)**
• **thyssenkrupp AG**
  **45143 Essen (DE)**

(72) Erfinder:
• **THEUERKAUF, Nils**
  **28865 Lilienthal (DE)**
• **ZIMMER, Christoph**
  **28201 Bremen (DE)**

(74) Vertreter: **thyssenkrupp Intellectual Property GmbH**
**ThyssenKrupp Allee 1**
**45143 Essen (DE)**

(56) Entgegenhaltungen:
WO-A1-2016/071961     WO-A1-2016/071961
CN-A- 108 339 728     CN-A- 108 339 728
CN-A- 110 420 825     CN-A- 110 420 825
US-A1- 2006 164 919   US-B1- 6 711 096
US-B1- 6 711 096

**Beschreibung**

Die Erfindung bezieht sich auf die Optimierung von Wasserschallwandlern für bestimmte Aufgaben.

Typischerweise sind Wasserschallwandler (sowohl Sender als auch Empfänger) hinsichtlich ihrer Richtcharakteristik für einen gewissen Frequenzbereich ausgelegt. Außerhalb dieses Frequenzbereichs weichen die Wandler von dem gewünschten Verhalten ab, so dass z.B. die erforderliche Abdeckung und Detektionsleistung nicht mehr gegeben ist. D.h., Wasserschallwandler, auch als Hydrophone bezeichnet, sind dazu optimiert, in einem je nach Einsatzgebiet der Hydrophone begrenzten Frequenzbereich eine möglichst große Empfindlichkeit zu erreichen. Solche Hydrophone sind dann dazu ausgelegt, z.B. von einem Aktivsonar ausgesendete Wasserschallsignale, sogenannte Pings, zu empfangen, oder mittels Passivsonar Signaturen von Wasserfahrzeugen aufzunehmen. Die Wasserschallwandler haben jedoch für gewissen Anwendungen den Nachteil, dass diese nur für einen vorgegebenen, engen Frequenzbereich von beispielsweise ±10% einer Mittenfrequenz optimiert sind. Der Frequenzgang ist dann stark frequenz- und richtungsabhängig. So können Frequenzen, die schlechter detektiert werden durch Frequenzen, die besser detektiert werden, überlagert werden. Somit wird eine Abbildung erzeugt, die die Wirklichkeit verzerrt, wenn über einen großen Frequenzbereich die Umgebung abgesucht werden soll. WO2016071961 offenbart einen spherischen Ultraschallwandler um omnidirektional Ultraschall empfangen und aussenden zu können. Dieser Ultraschallwandler ist für Unterwassermessungen geeignet. Er besteht aus einer Vielzahl von konvex/konkav gekrümmten piezoelektrischen Elementen mit zu den Enden hin spitz zulaufenden Enden. Elektroden sind auf der Ober- und Unterseite vorhanden. Diese gekrümmten, piezoelektrischen Elemente sind auf einer Halbkugel oder Kugel angeordnet. US 2006/164919 offenbart eine Halbkugel mit zylindrischem Unterbau, auf der kreisförmige Wandlerelemente angeordnet sind. Diese Vorrichtung dient zur Detektion von Unterwasserobjekten. Die Wandlerelemente werden über Elektroden einzeln angesteuert.

Die Aufgabe der vorliegenden Erfindung besteht deshalb darin, ein verbessertes Konzept für Wasserschallwandler zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen einen Wasserschallwandler mit einer Vielzahl von Wandlereinheiten, die zweidimensional angeordnet sind, wobei die Wandlereinheiten jeweils eine erste und eine zweite Kontaktfläche aufweisen. Die ersten Kontaktflächen der Wandlereinheiten sind jeweils mit einer (insbesondere gemeinsamen) ersten Elektrode (insbesondere zumindest elektrisch) verbunden und die zweiten Kontaktflächen der Wandlereinheiten sind jeweils mit einer (insbesondere gemeinsamen) zweiten Elektrode (insbesondere zumindest elektrisch) verbunden. Ferner sind die Wandlereinheiten derart angeordnet, dass eine Einhüllende der ersten Kontaktflächen der Wandlereinheiten kissenförmig ist. Die Einhüllende wird auch als Kontur des Wasserschallwandlers bezeichnet. Kissenförmig bedeutet, dass die Einhüllende konvex, also nach außen gewölbt, geformt ist. Ferner kann die Kissenform symmetrisch sein, insbesondere symmetrisch in vertikaler und/oder in horizontaler Ausdehnung des Wasserschallwandlers. Die vertikale bzw. horizontale Ausdehnung bezieht sich auf die vorgegebene Orientierung bei der Verwendung des Wasserschallwandlers. Die Wandlereinheiten sind beispielsweise Stäbchen aus einem piezoelektrischen Material, insbesondere einer Piezokeramik, beispielsweise Blei-Zirkonat-Titanat (PZT). Die Wandlereinheiten können mit einer Vergussmasse, beispielsweise einem Harz oder einem Kunststoff, zu einer Piezokompositmatrix, insbesondere einer Piezokompositkeramik, vergossen sein. In Ausführungsbeispielen ist die Kissenform eine in zwei Dimensionen (x,y) gekrümmte Einhüllende. So entsteht eine Elevation des Wasserschallwandlers in beiden Dimensionen. Somit kann eine Richtcharakteristik des Wasserschallwandlers für beide Dimensionen unabhängig voneinander eingestellt werden.

Idee ist es, die Wandlereinheiten nicht nur flächig, sondern auch räumlich anzuordnen. So kann ein gewünschtes Verhalten, beispielsweise ein Frequenzgang, des Wasserschallwandlers, durch die räumliche Anordnung der Wandlereinheiten eingestellt werden. Die Kissenform führt dazu, dass der horizontale Frequenzgang des Wasserschallwandlers dahingehend optimiert wird, dass die Empfindlichkeit des Wasserschallwandlers über einen großen Frequenzbereich von beispielsweise 350kHz ± 70% (=der Arbeitsbereich des Wasserschallwandlers) über einen Empfangswinkel konstant bleibt. Für benachbarte Empfangswinkel nimmt die Empfindlichkeit (idealisiert) linear ab. Es entsteht idealisiert eine Dreieck-förmige Empfindlichkeit über der Richtung für alle Frequenzen in dem Arbeitsbereich. Die Dämpfung bei 15° beträgt beispielsweise ca. 6dB. Präziser ausgedrückt weist die Dreieck-förmige Empfindlichkeit idealisiert die Form eines geraden Prismas mit dreieckiger Grund- und Deckfläche auf. Somit kann ein Wasserschallwandler horizontal über einen (einzelnen) Sende- bzw. Empfangswinkel und einen großen Frequenzbereich Schallwellen empfangen, ohne dass die Schallwellen durch die Wandlercharakteristik beeinflusst wird. Um dies zu erreichen, wird auch eine Reduzierung der Empfindlichkeit des Wasserschallwandlers für einige Frequenzen in Kauf genommen.

Das Potential eines solchen Wasserschallwandlers wird deutlich, wenn eine Vielzahl von Wasserschallwandlern kreisförmig, genauer in einem regelmäßigen Vieleck, zu einem Array angeordnet sind. Das heißt, dass beispielsweise 12 Wasserschallwandler zu einem regelmäßigen 12-eck angeordnet sind. Eine solche Anordnung ermöglicht es, über den vollständigen Azimut, also über einen Horizontalwinkel von 360°, eine im Wesentlichen konstante Empfindlichkeit des Arrays von Wasserschallwandlern zu erhalten. Die konstante Empfindlichkeit des Arrays der Wasserschallwandler wird hierbei über die räumliche Anordnung der Wandlereinheiten zueinander geschaffen. Anders ausgedrückt addieren sich die Dreieck-förmige Empfindlichkeit von benachbarten Wasserschallwandlern zu einer (idealisiert) konstanten Empfindlichkeit.

Ferner wird durch die Kissenform auch der vertikale Frequenzgang des Wasserschallwandlers durch die räumliche Anordnung der Wandlereinheiten gemäß einem gewünschten Verhalten eingestellt. Die Kissenform führt dazu, dass der Frequenzgang des Wasserschallwandlers dahingehend optimiert wird, dass die Empfindlichkeit des Wasserschallwandlers über einen großen Frequenzbereich von beispielsweise 350kHz $\pm$ 70% (=der Arbeitsbereich des Wasserschallwandlers) über einen großen Empfangswinkel von beispielsweise $\pm$ 15° konstant bleibt. Es entsteht idealisiert eine Trapez-förmige Empfindlichkeit über der Richtung für alle Frequenzen in dem Arbeitsbereich. Präziser ausgedrückt weist die Trapez-förmige Empfindlichkeit idealisiert die Form eines geraden Prismas mit trapezförmiger Grund- und Deckfläche auf. Somit kann der Wasserschallwandler vertikal über einen großen Sende- bzw. Empfangswinkel von beispielsweise 30° und einen großen Frequenzbereich Schallwellen empfangen, ohne dass die Schallwellen durch die Wandlercharakteristik beeinflusst wird.

In Ausführungsbeispielen sind die Wandlereinheiten auf einem Basiselement angeordnet. Eine Oberseite des Basiselements, die in Richtung der Wandlereinheiten zeigt, und eine der Oberseite gegenüberliegende Unterseite des Basiselements, und die Einhüllende, weisen die gleiche Form auf. Das heißt, bei einer Parallelverschiebung der Einhüllenden auf die Oberseite bzw. die Unterseite des Basiselements sind die Einhüllende und die Oberseite bzw. die Unterseite des Basiselements deckungsgleich. Eine solche Ausgestaltung ist vorteilhaft, wenn der Wasserschallwandler verschiedenen Umgebungsdrücken ausgesetzt ist, beispielsweise unter Wasser in verschiedenen Wassertiefen. Einhüllende (Kontur) der Kontaktflächen soll sich durch äußeren Druck, insbesondere auch durch Wasserdruck in Abhängigkeit von der Tauchtiefe, nicht ändern. Andernfalls würde sich die Eigenschaften des Wasserschallwandlers, insbesondere dessen Empfindlichkeit, frequenz- und/oder richtungsabhängig verändern. Es ist vorteilhaft, die Form der Unterseite des Basiselements ebenfalls so zu wählen wie die Form der Oberseite des Basiselements. Dann kann eine konstante, d.h. frequenz- und/oder richtungsunabhängige Veränderung der Eigenschaften des Wasserschallwandlers bei Druckänderungen erhalten werden. Das Basiselement wird dann bei einer Druckerhöhung über der gesamten Fläche im gleichen Ausmaß gestaucht.

Diese Erkenntnis ist jedoch auch für nicht kissenförmig angeordnete Wandlereinheiten zutreffend. So zeigt ein Ausführungsbeispiel eines zweiten Aspekts einen Wasserschallwandler mit einer Vielzahl von Wandlereinheiten, die zweidimensional auf einem Basiselement angeordnet sind. Die Wandlereinheiten weisen jeweils eine erste und eine zweite Kontaktfläche auf. Die ersten Kontaktflächen der Wandlereinheiten sind mit einer ersten Elektrode (vorteilhafterweise elektrisch und mechanisch) verbunden und die zweiten Kontaktflächen der Wandlereinheiten sind mit einer zweiten Elektrode (vorteilhafterweise elektrisch und mechanisch) verbunden. Eine Oberseite des Basiselements, die in Richtung der Wandlereinheiten zeigt und eine der Oberseite gegenüberliegende Unterseite des Basiselements und eine Einhüllende der ersten Kontaktflächen weisen die gleiche Form auf. Der Wasserschallwandler des zweiten Aspekts unterscheidet sich von dem vorgenannten Wasserschallwandler einzig dahingehend, dass die Form der Einhüllenden der Wandlereinheiten beliebig ist und dass diese Form obligatorisch (und nicht fakultativ) auf die Oberseite und die Unterseite des Basiselements übertragen wird. Die Kissenform ist jedoch auch in dem zweiten Ausführungsbeispiel eine mögliche Ausgestaltung. Die folgenden Ausführungsbeispiele können sich auf beide Wasserschallwandler beziehen - wobei Ausführungsbeispiele zur Kissenform sich auf das Ausführungsbeispiel des zweiten Aspekts bezieht, der die Kissenform einführt.

Die Wasserschallwandler können gestapelt aufgebaut sein. So weisen die Wasserschallwandler in Ausführungsbeispielen einen Stapel mit folgenden Schichten auf: in einer ersten Schicht umfasst der Stapel das Basiselement, in einer zweiten Schicht oberhalb der Oberseite des Basiselements ist die zweite Elektrode angeordnet, in einer dritten Schicht oberhalb der zweiten Elektrode sind die Wandlereinheiten zweidimensional angeordnet, in einer vierten Schicht oberhalb der Wandlereinheiten ist die erste Elektrode angeordnet. Die Wandlereinheiten können jeweils mit einem ersten Kontakt die erste Elektrode elektrisch kontaktieren und mit einem zweiten Kontakt die zweite Elektrode elektrisch kontaktieren. Typischerweise sind die Wandlereinheiten bei einer elektrischen Kontaktierung auch mechanisch mit der ersten bzw. der zweiten Elektrode verbunden.

Ausführungsbeispielen zeigen, dass die Kissenform $z_h(x)$ in einer ersten (z.B. horizontalen) Dimension ($x$) eine Kontur aufweist, die durch das Polynom

$$z_h(x) = X_2 \cdot x^2 + X_4 \cdot x^4 + X_6 \cdot x^6 + X_8 \cdot x^8 + X_{10} \cdot x^{10} + X_{12} \cdot x^{12} + X_{14} \cdot x^{14} + X_{16} \cdot x^{16}.$$

mit

$$X_2 = -1{,}102248436127560E - 01$$

$$X_4 = -7{,}798252809214000E + 04$$

$$X_6 = 3{,}080405149858780E + 08$$

$$X_8 = 4{,}015851040327540E + 11$$

$$X_{10} = -4{,}977431310325020E + 15$$

$$X_{12} = 2{,}614009340410490E + 18$$

$$X_{14} = 2{,}687463597223600E + 22$$

$$X_{16} = -3{,}790562133342640E + 25$$

und einer Toleranz von 0,001m, bevorzugt 0,0005m, besonders bevorzugt 0,0001m begrenzt ist. Die Toleranz beschreibt einen Offset der Funktion $z_h(x)$, d.h. eine Verschiebung entlang der z-Achse. In anderen Worten wird die Toleranz als konstanter Term zu der Funktion addiert oder von dieser subtrahiert. D.h., die Kontur in der ersten Dimension liegt innerhalb der Fläche, die durch das Polynom und die maximale Toleranz eingeschlossen ist, insbesondere weist die Kontur in der ersten Dimension die Form des Polynoms $z_h(x)$ auf. Bevorzugt beträgt eine Ausdehnung des Kissens in der ersten Dimension zwischen 0,03m und 0,05m, bevorzugt zwischen 0,035m und 0,045m, besonders bevorzugt zwischen 0,038 und 0,040m, beispielsweise 0,039m.

Liegt die Kissenform innerhalb der beschriebenen Grenzen für die erste Dimension, ergibt sich ein Wasserschallwandler, der in der ersten Dimension eine Dreieck-förmige Empfindlichkeit über der Frequenz aufweist. Dies ist vorteilhaft, wenn Wasserschallwandler in einem Array angeordnet werden, so dass diese in Summe eine konstante Empfindlichkeit über der Richtung aufweisen. Die Kontur ist beispielsweise für einen Wasserschallwandler optimiert, dessen Wandlereinheiten äquidistant angeordnet sind und/oder dessen Wandlereinheiten eine Dichte von 40 bis 60 Wandlereinheiten pro Quadratzentimeter aufweisen. Die erste Dimension ist beispielsweise die Horizontale.

Analog zeigt ein Ausführungsbeispiel, dass die Kissenform $z_v(y)$ in einer zweiten (z.B. vertikalen) Dimension ($y$) eine Kontur aufweist, die durch das Polynom

$$z_v(y) = Y_2 \cdot y^2 + Y_4 \cdot y^4 + Y_6 \cdot y^6 + Y_8 \cdot y^8 + Y_{10} \cdot y^{10} + Y_{12} \cdot y^{12} + Y_{14} \cdot y^{14} + Y_{16} \cdot y^{16}.$$

mit

$$Y_2 = -15{,}6474404327660$$

$$Y_4 = 81025{,}7633563034$$

$$Y_6 = -1246494097{,}34679$$

$$Y_8 = 13481472680661{,}9$$

$$Y_{10} = -8{,}53691186195647e + 16$$

$$Y_{12} = 2{,}29508952803708e + 20$$

$$Y_{14} = -2{,}12497987038051E + 22$$

$$Y_{16} = -6{,}32568522314303E + 26$$

und einer Toleranz von 0,001m, bevorzugt 0,0005m, besonders bevorzugt 0,0001m begrenzt ist. Die Toleranz beschreibt einen Offset der Funktion $z_v(y)$, d.h. eine Verschiebung entlang der z-Achse. In anderen Worten wird die Toleranz als konstanter Term zu der Funktion addiert oder von dieser subtrahiert. D.h., die Kontur liegt innerhalb der Fläche, die durch das Polynom und die maximale Toleranz eingeschlossen ist, insbesondere weist die Kontur in der zweiten Dimension die Form des Polynoms $z_v(y)$ auf. Bevorzugt beträgt eine Ausdehnung des Kissens in der zweiten Dimension zwischen 0,023m und 0,04m, bevorzugt zwischen 0,027m und 0,035m, besonders bevorzugt zwischen 0,030 und 0,032m, beispielsweise 0,031m.

Liegt die Kissenform innerhalb der beschriebenen Grenzen für die zweite Dimension, ergibt sich ein Wasserschallwandler, der in der zweiten Dimension eine Trapez-förmige Empfindlichkeit über der Frequenz aufweist. Die Kontur ist beispielsweise für einen Wasserschallwandler optimiert, dessen Wandlereinheiten äquidistant angeordnet sind und/oder dessen Wandlereinheiten eine Dichte von 40 bis 60 Wandlereinheiten pro Quadratzentimeter aufweisen. Die zweite Dimension ist beispielsweise die Vertikale.

Die erste Dimension ist beispielsweise senkrecht zu der zweiten Dimension angeordnet. In anderen Worten spannen die erste und die zweite Dimension eine Fläche auf, von der sich die Kissenform in eine dritte Dimension abhebt. Das heißt in nochmals anderen Worten, dass sich eine Elevation (=dritte Dimension) der Kissenform aus der Superposition der Kissenform in der ersten Dimension und der Kissenform in der zweiten Dimension ergibt. Mathematisch ist die Kissenform $z(x,y)$ wie folgt beschrieben: $z(x,y) = z_h(x) + z_v(y)$. Hierbei können sich auch die Toleranzen addieren. So kann sich die resultierende Kissenform innerhalb eines Volumens befinden, das durch die Funktion $z(x,y)$ mit der Toleranz in z-Richtung gebildet ist. Insbesondere kann die Kissenform die Form der Funktion $z(x,y)$ aufweisen.

Die Kissenform hat beispielsweise eine maximale Elevation von weniger als 0,007m. Anders ausgedrückt kann eine Wandlereinheit, die mittig (in x-y-Richtung) in der Kissenform angeordnet ist, bis zu 0,007m höher (in z-Richtung) angeordnet sein, als ein Wandlerelement, dass am Rand (in x-y-Richtung) der Kissenform angeordnet ist.

Die Form der Einhüllenden, also die Kissenform, kann demnach durch ein Polynom aber auch z.B. durch eine Fourierreihe oder eine abschnittsweise definierte Funktion wie z.B. eine Treppenfunktion, beschreibbar sein. Liegt die Kissenform innerhalb der beschriebenen Grenzen für das Volumen, ergibt sich ein Wasserschallwandler, der bereits anhand der Geometrie eine Dreieck-förmige Empfindlichkeit über der Frequenz aufweist in der ersten Dimension und eine Trapez-förmige Empfindlichkeit über der Frequenz in der zweiten Dimension innerhalb eines Frequenzbereichs von 100 kHz bis 600 kHz aufweist. Die Kontur ist beispielsweise für einen Wasserschallwandler optimiert, dessen Wandlereinheiten äquidistant angeordnet sind und/oder dessen Wandlereinheiten eine Dichte von 40 bis 60 Wandlereinheiten pro Quadratzentimeter aufweisen.

In Ausführungsbeispielen weisen die Wandlereinheiten (der Vielzahl von Wandlereinheiten) den gleichen Abstand zwischen der ersten und der zweiten Kontaktfläche auf. Anders ausgedrückt haben alle Wandlereinheiten die gleiche Länge. Dies ist vorteilhaft, um nichtlinearen Effekte durch die Wandlereinheiten an sich vorzubeugen, die bei der Dimensionierung des Wasserschallwandlers berücksichtigt werden müssten. Wären die Wandlereinheiten unterschiedlich lang, würden diese bei gleichem einfallenden Schalldruck eine unterschiedliche Ausgangsspannung ausgeben. Dies soll jedoch vermieden werden.

In Ausführungsbeispielen ist das Basiselement ausgebildet, Schallwellen zu absorbieren. In anderen Worten kann das Basiselement ein Material aufweisen, dass Schall dämpft und somit absorbiert. So kann der Wasserschallwandler dazu ausgebildet sein, möglichst keinen Streuschall durch Reflexionen zu generieren, um die eingestellten Eigenschaften des Wasserschallwandlers nicht zu verschlechtern. Prinzipiell ist es jedoch auch möglich, den Wasserschallwandler so auszulegen, dass Reflexionen berücksichtigt sind. Dann kann das Basiselement auch als Schallreflektor ausgelegt sein.

Obenstehend wurde bereits darauf eingegangen, dass die Wasserschallwandler erfindungsgemäß zu einem Array angeordnet sind. So ist ein Array von Wasserschallwandlern offenbart, das eine Vielzahl der beschriebenen Wasserschallwandler aufweist. Die Wasserschallwandler der Vielzahl von Wasserschallwandler sind ringförmig angeordnet um das Array zu bilden. Die ersten Kontaktflächen sind jeweils nach außen gewandt und die zweiten Kontaktflächen zeigen jeweils zur Ringmitte. Aufgrund der flächigen Ausgestaltung der Wasserschallwandler kann der Ring natürlich nur angenähert werden. Präziser ausgedrückt sind die Wasserschallwandler erfindungsgemäß zu einem (regelmäßigen) Vieleck angeordnet. Vorteilhafterweise grenzen benachbarte Wasserschallwandler aneinander an, d.h. der Ring bzw. das Vieleck ist geschlossen. Ausführungsbeispiele zeigen ferner das Array, wobei separat von dem Ring der Wasserschallwandler weitere Wasserschallwandler, insbesondere weitere der vorgenannten Wasserschallwandler, angeordnet sind, wobei die weiteren Wasserschallwandler in einem Winkel zwischen 20 Grad bis 50 Grad zu den Wasserschallwandlern des Rings angeordnet sind. Dies ist vorteilhaft, damit Schallwellen, die seitlich auf den Ring, also vertikal auf die Wasserschallwandler, auftreffen, besser detektiert werden können. In anderen Worten decken die weiteren Wasserschallwandler die obere Hemisphäre des Arrays ab.

Analog ist ein Verfahren zur Herstellung eines Wasserschallwandlers mit folgenden Schritten offenbart: zweidimensionales Anordnen einer Vielzahl von Wandlereinheiten, wobei die Wandlereinheiten jeweils eine erste und eine zweite Kontaktfläche aufweisen; Verbinden der ersten Kontaktflächen der Wandlereinheiten jeweils mit einer ersten Elektrode; Verbinden der zweiten Kontaktflächen der Wandlereinheiten jeweils mit einer zweiten Elektrode; wobei die Wandlereinheiten derart angeordnet werden, dass eine Einhüllende der ersten Kontaktflächen der Wandlereinheiten kissenförmig ist; und/oder wobei die Wandlereinheiten auf einem Basiselement angeordnet werden, wobei eine Oberseite des Basiselements, die in Richtung der Wandlereinheiten zeigt, und eine der Oberseite gegenüberliegende Unterseite des Basiselements, und die Einhüllende, die gleiche Form aufweisen.

Ferner ist ein Verfahren zur Optimierung eines Wasserschallwandlers mit folgenden Schritten gezeigt: Berechnen eines Ausgangssignals eines Wasserschallwandlers mit einer Vielzahl von Wandlereinheiten für eine Vielzahl von Schallwellen, die aus unterschiedlichen Richtungen auf den Wasserschallwandler auftreffen; Variieren einer Elevation einer Auswahl von Wandlereinheiten der Vielzahl von Wandlereinheiten; Wiederholen des Berechnens des Ausgangssignals und des Variierens der Elevation bis der Wasserschallwandler für vorgegebene Randbedingungen optimiert ist.

Als Wasserschallwandler wird vorteilhafterweise ein Computermodell desselben verwendet, dass die Eigenschaften eines realen Wasserschallwandlers abbildet. Die Berechnung kann daher auch als Simulation bezeichnet werden. Die Elevation der einzelnen Wandlereinheiten kann ferner ebenfalls in dem Modell durchgeführt werden. Das Modell des Wasserschallwandlers kann ferner auch die (Auswerte-) Elektronik desselben umfassen. Die Randbedingungen können die in dieser Offenbarung beschriebene konstante Empfindlichkeit für das Array der Wasserschallwandler sein. Eine weitere oder alternative Randbedingung kann die Reduktion des Einflusses von Störgeräuschen sein, beispielsweise für die Auswahl des Basiselements.

Rechnerisch wird beispielsweise die Abweichung der realen Richtcharakteristik von der gewünschten Richtcharakteristik des Wandlerelements durch die Variation der Elevation minimiert. Die Richtcharakteristik kann eine vorgegebene Randbedingung sein, so dass die Minimierung die Optimierung der vorgegebenen Randbedingung darstellt. Als Richtcharakteristik wird die frequenz- und winkelabhängige Empfindlichkeit bezeichnet. D.h. über alle Frequenzen des Arbeitsbereichs wird die Richtcharakteristik optimiert. In anderen Worten wird die frequenz- und winkelabhängige Empfindlichkeit an die gewünschte Richtcharakteristik angepasst.

Entsprechend ist ebenfalls ein Verfahren zur Optimierung eines Arrays von Wasserschallwandlern offenbart, wobei das Ausgangssignal einer Vielzahl von Wasserschallwandlern berechnet wird und wobei die Elevation der Auswahl von Wandlereinheiten für die entsprechenden Wandlereinheiten jedes Wasserschallwandlers in dem Array durchgeführt wird.

Bevorzugte Ausführungsbeispiele der vorliegenden Erfindung werden nachfolgend Bezug nehmend auf die beiliegenden Zeichnungen erläutert. Es zeigen:

Fig. 1: eine schematische Darstellung eines Wasserschallwandlers, wobei Fig. 1a eine schematische Schnittdarstellung und Fig. 1b eine schematische perspektivische Darstellung des Wasserschallwandlers zeigt;

Fig. 2: eine schematische idealisierte Darstellung eines Plots der Empfindlichkeit des Wasserschallwandlers über der Frequenz und der Richtung der einfallenden Schallwellen, wobei Fig. 2a die horizontale Empfindlichkeit und Fig. 2b die vertikale Empfindlichkeit darstellt;

Fig. 3: eine schematische Darstellung zweier Wandlereinheiten, auf die Schallwellen S(t) auftreffen;

Fig. 4: eine schematische perspektivische Darstellung eines Arrays der Wasserschallwandler; und

Fig. 5: eine schematische idealisierte Darstellung eines Plots der Empfindlichkeit des Arrays von Wasserschallwandlers über der Frequenz und der Richtung der einfallenden Schallwellen.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

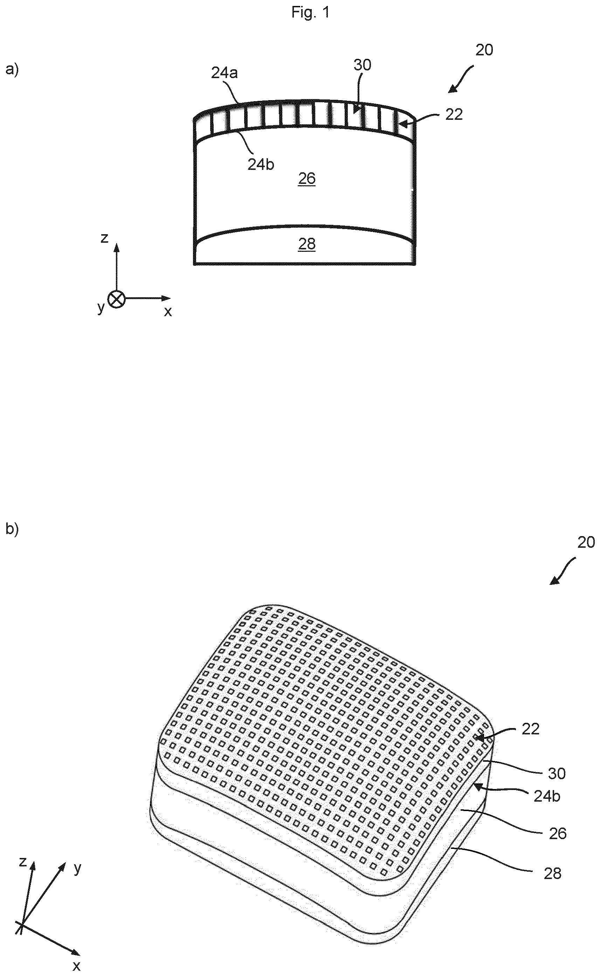

Fig. 1a zeigt eine schematische Schnittdarstellung eines Wasserschallwandlers 20. Der Wasserschallwandler 20 weist eine Vielzahl von Wandlereinheiten 22, eine erste Elektrode 24a und eine zweite Elektrode 24b auf. Ferner ist ein optionales Basiselement 26 sowie ein optionales Strukturelement 28 gezeigt.

Die Wandlereinheiten 22 weisen eine erste und eine zweite Kontaktfläche auf, die mit der ersten bzw. der zweiten Elektrode 24a, 24b zumindest elektrisch verbunden ist. Die Kontaktflächen werden z.B. durch die (gegenüberliegenden) Stirnflächen der Wandlereinheiten gebildet. Die Wandlereinheiten 22 sind zweidimensional (x, y) angeordnet (vgl. Fig. 1b). Ferner weisen die Wandlereinheiten 22 auch eine Elevation (z) in einer dritten Dimension (senkrecht zu der ersten und der zweiten Dimension) auf. Durch die Elevation entsteht hier eine kissenförmige, d.h. konvexe, Einhüllende der Wandlereinheiten. Die Form der Einhüllenden entspricht hier der Form der ersten Elektrode 24a. Prinzipiell ist die Wahl der Einhüllenden für Wasserschallwandler, die anders optimiert sind, frei wählbar. Die kissenförmige Einhüllende ist jedoch vorteilhaft, um eine möglichst konstante Empfindlichkeit über der Richtung und der Frequenz (innerhalb eines Arbeitsbereichs der Wandlereinheiten) zu erhalten.

In Ausführungsbeispielen sind die Wandlereinheiten 22 mittels einer Vergussmasse 30, beispielsweise einem Harz oder einem Kunststoff, vergossen. Die Vergussmasse 22 füllt die Zwischenräume zwischen den Wandlereinheiten 22 aus. Die Kontaktflächen der Wandlereinheiten 22 bleiben jedoch frei oder werden nachträglich freigelegt. So entsteht eine Piezokompositmatrix. Sind die Wandlereinheiten aus einer Piezokeramik geformt, wird die Matrix auch als Piezokompositkeramik bezeichnet.

Das optionale Basiselement 26 ist ausgebildet, eine definierte Beeinflussung der auftreffenden Schallwellen auszuüben. Typische Beeinflussungen sind die Reflexion oder die Absorption der Schallwellen. Die Wahl des Basiselements ist abhängig von der Optimierung der Einhüllenden der Wandlereinheiten. D.h., bei der Optimierung der Einhüllenden der Wandlereinheiten ist das Basiselement bereits mit zu berücksichtigen. Andernfalls könnten reflektierte oder nicht reflektierte Schallwellen die eingestellten Eigenschaften des Wasserschallwandlers zunichtemachen.

Das optionale Strukturelement 28 bietet die notwendige Festigkeit für den Wasserschallwandler. Ferner bietet das Strukturelement 28 die Möglichkeit einer einfacheren Befestigung des Wasserschallwandlers z.B. an einem Wasserfahrzeug, insbesondere einem U-Boot.

Fig. 1b zeigt eine schematische perspektivische Darstellung des Wasserschallwandlers 20. Hier ist auch die zweidimensionale Anordnung der Wandlereinheiten 22 in der x-y-Ebene sichtbar. Die Wandlereinheiten 22 können äquidistant angeordnet sein. Auch die kissenförmige Einhüllende der Wandlereinheiten 22 ist zu erkennen. Die erste Elektrode 24a ist nicht gezeigt, damit die Sicht auf die Wandlereinheiten 22 freigegeben ist. Die Wandlereinheiten können eine Dichte von 40 bis 60 Wandlereinheiten pro Quadratzentimeter (in der x-y-Ebene) aufweisen. Die Dichte bzw. die Größe der Wandlereinheiten hängt jedoch maßgeblich von dem Arbeitsbereich (Frequenzbereich) ab für den der Wasserschallwandler eingesetzt wird.

Die Form der Einhüllenden, d.h. die Kissenform ist beispielsweise durch die Überlagerung der Polynome

$$z_h(x) = X_2 \cdot x^2 + X_4 \cdot x^4 + X_6 \cdot x^6 + X_8 \cdot x^8 + X_{10} \cdot x^{10} + X_{12} \cdot x^{12} + X_{14} \cdot x^{14} + X_{16} \cdot x^{16}.$$

mit

$$X_2 = -1{,}102248436127560E - 01$$

$$X_4 = -7{,}798252809214000E + 04$$

$$X_6 = 3{,}080405149858780E + 08$$

$$X_8 = 4{,}015851040327540E + 11$$

$$X_{10} = -4{,}977431310325020E + 15$$

$$X_{12} = 2{,}614009340410490E + 18$$

$$X_{14} = 2{,}687463597223600E + 22$$

$$X_{16} = -3{,}790562133342640E + 25$$

und

$$z_v(y) = Y_2 \cdot y^2 + Y_4 \cdot y^4 + Y_6 \cdot y^6 + Y_8 \cdot y^8 + Y_{10} \cdot y^{10} + Y_{12} \cdot y^{12} + Y_{14} \cdot y^{14} + Y_{16} \cdot y^{16}.$$

mit

$Y_2$ = -15,6474404327660
$Y_4$ = 81025,7633563034
$Y_6$ = -1246494097,34679
$Y_8$ = 13481472680661,9

$$Y_{10} = -8{,}53691186195647e + 16$$

$$Y_{12} = 2{,}29508952803708e + 20$$

$$Y_{14} = -2{,}12497987038051E + 22$$

$$Y_{16} = -6{,}32568522314303E + 26$$

realisiert.

Fig. 1a und Fig. 1b offenbaren ferner einen stapelförmigen Aufbau des Wasserschallwandler 22. Der Stapel weist folgende Schichten auf: auf dem Strukturelement (optional) als Ausgangsschicht umfasst der Stapel das Basiselement 26 (optional) in einer ersten Schicht, in einer zweiten Schicht oberhalb einer Oberseite des Basiselements 26 ist die zweite Elektrode 24b angeordnet, in einer dritten Schicht oberhalb der zweiten Elektrode sind die Wandlereinheiten 22 zweidimensional angeordnet, in einer vierten Schicht oberhalb der Wandlereinheiten 22 ist die erste Elektrode 24a angeordnet. Die Schichten werden so gestapelt, dass eine Unterseite der aktuellen Schicht der Oberseite der vorangegangenen Schicht gegenüberliegt, insbesondere mechanisch kontaktiert.

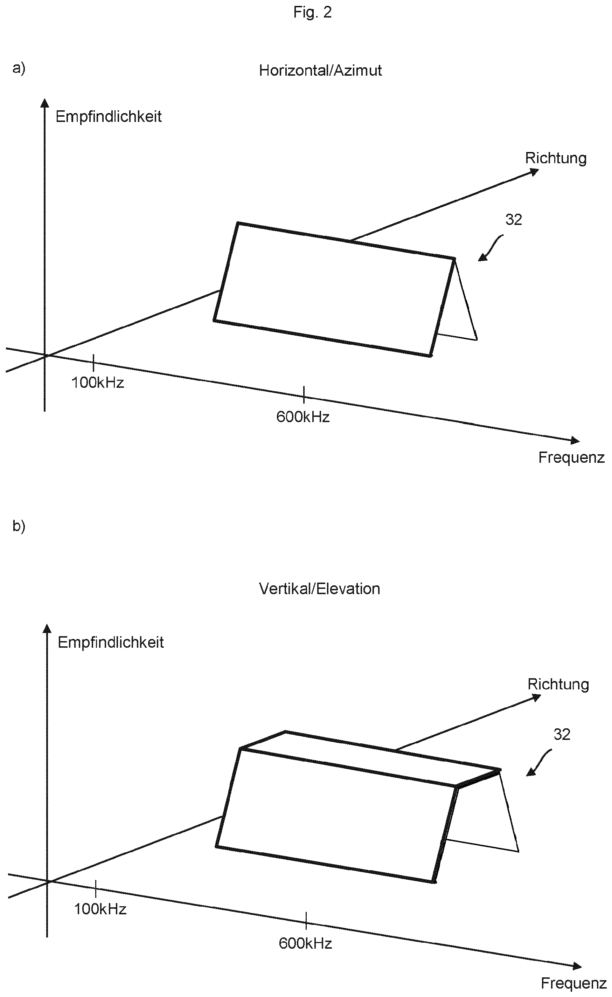

Fig. 2a zeigt eine beispielhafte geglättete Empfindlichkeitskurve 32 des Wasserschallwandlers über der Frequenz und der horizontalen Richtung (Azimut) der einfallenden Schallwellen auf den Wasserschallwandler. Der Wasserschallwandler ist derart optimiert, dass dieser im Frequenzbereich zwischen 100kHz und 600kHz eine möglichst konstante Empfindlichkeit für die gleiche Einfallsrichtung aufweist. Somit ergibt sich die Dreieck-förmige Ausgestaltung der horizontalen Empfindlichkeitskurve.

Fig. 2b zeigt eine beispielhafte geglättete Empfindlichkeitskurve 32 des Wasserschallwandlers über der Frequenz und der vertikalen Richtung (Elevation) der einfallenden Schallwellen auf den Wasserschallwandler. Der Wasserschallwandler ist derart optimiert, dass dieser im Frequenzbereich zwischen 100kHz und 600kHz eine möglichst konstante Empfindlichkeit für möglichst viele Einfallsrichtungen aufweist. Somit ergibt sich die Trapez-förmige Ausgestaltung der horizontalen Empfindlichkeitskurve.

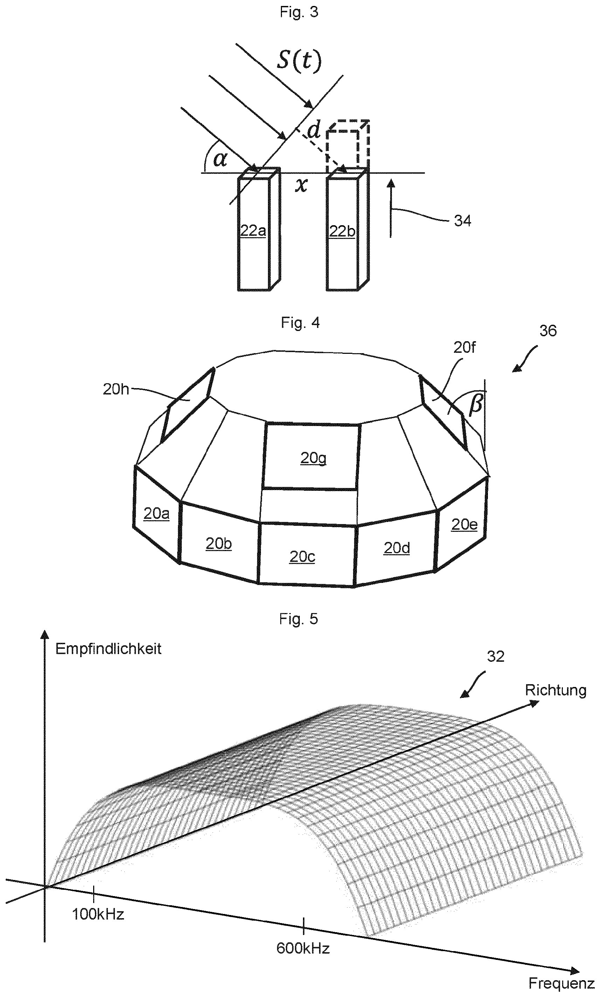

Fig. 3 zeigt eine schematische perspektivische Darstellung zweier Wandlereinheiten 22a, 22b. Die Wandlereinheiten 22a, 22b weisen einen (Mitten-) Abstand x zueinander auf. Auf die Wandlereinheiten 22a, 22b treffen Wasserschallwellen S(t) auf. Aufgrund der Einfallsrichtung, d.h. einem Einfallswinkel $\alpha$ zwischen den Wandlereinheiten und der Wellenfront der Wasserschallwellen, ergibt sich eine Wegstrecke d, die die Wasserschallwellen zwischen dem Auftreffen der Wasserschallwellen auf die erste Wandlereinheit 22a und die zweite Wandlereinheit 22b zurücklegt. Diese Wegstrecke führt dazu, dass Wasserschallwellen mit einer Frequenz f, die ein Vielfaches von der doppelten Wasserschallgeschwindigkeit c geteilt durch die Wegstrecke d ( $f = \frac{c}{2 \cdot d}$ ) zurücklegen, sich auslöschen. Die Wasserschallwellen interferieren. Dies ist der Grund, warum Wasserschallwandler mit einer Vielzahl von Wandlereinheiten, eine richtungsabhängige Empfindlichkeit aufweisen. Dies kann durch eine entsprechende Signalverarbeitung der einzelnen Wandlereinheiten ausgeglichen werden.

Insbesondere für den Empfang von hohen Frequenzen sind die Wandlereinheiten jedoch sehr klein, so dass ein separater Anschluss der einzelnen Wandlereinheiten nicht oder nur sehr schwer möglich ist. Daher wird bevorzugt das Summensignal ausgewertet, so dass die Wandlereinheiten jeweils eine gemeinsame erste und zweite Elektrode aufweisen. In diesem Fall ist eine separate Signalverarbeitung der einzelnen Signale der Wandlereinheiten jedoch nicht möglich. Die Wegstrecke d, anders ausgedrückt die Laufzeitdifferenz, die der Wasserschall S(t) nach dem Auftreffen auf die erste Wandlereinheit 22a bis zum Eintreffen auf die zweite Wandlereinheit 22b zurücklegt, kann durch ein Verschieben der zweiten Wandlereinheit 22b in Pfeilrichtung 34, d.h. eine Elevation desselben, reduziert werden. Die verschobene zweite Wandlereinheit 22b ist gestrichelt dargestellt.

Fig. 4 zeigt ein Array 36 von Wasserschallwandlern 20. Das Array 36 weist eine Vielzahl von Wasserschallwandlern 20a - 20e auf, die ringförmig angeordnet sind um das Array zu bilden. Die ersten Kontaktflächen der Wasserschallwandler zeigt nach außen, die zweiten Kontaktflächen der Wasserschallwandler zeigen nach innen. Anders ausgedrückt ist die Kissenform, d.h. die Elevation, der Wasserschallwandler nach außen gewandt. In dieser Anordnung wird mit den beschriebenen Wasserschallwandlern eine konstante Empfindlichkeit über einen großen Frequenzbereich (ca. 100-600kHz) über den gesamten Azimut erreicht.

Separat von dem Ring der Wasserschallwandler sind weitere Wasserschallwandler 20f, 20g, 20h angeordnet. Diese weisen einen Neigungswinkel β zu den Wasserschallwandlern 20a - 20e des Rings auf. Der Neigungswinkel β beträgt bevorzugt zwischen 20° und 50°. In dieser Anordnung wird ferner die Elevation, d.h. die obere Hemisphäre von dem Array mit abgebildet. Die Abdeckung des Höhenwinkels für das Array, in dem die Empfindlichkeit konstant ist, beträgt dann zwischen -15° und 90°.

Fig. 5 zeigt eine beispielhafte geglättete Empfindlichkeitskurve 32 des Arrays von Wasserschallwandlern über der Frequenz und der horizontalen Richtung (Azimut) der einfallenden Schallwellen auf den Wasserschallwandler. Der Wasserschallwandler ist derart optimiert, dass dieser im Frequenzbereich zwischen 100kHz und 600kHz eine möglichst konstante Empfindlichkeit für die gleiche Einfallsrichtung aufweist. Somit ergibt sich die Dreieck-förmige Ausgestaltung der horizontalen Empfindlichkeitskurve.

In allen Ausführungsbeispielen wurde auf empfangene Wasserschallwellen abgezielt. Die Offenbarung ist aber ebenso analog auf gesendete Wasserschallwellen anwendbar.

Die offenbarten (Wasser-) Schallwandler sind für den Einsatz unter Wasser, insbesondere im Meer, ausgelegt. Die Schallwandler sind ausgebildet, Wasserschall in eine dem Schalldruck entsprechenden elektrischen Signal (z.B. Spannung oder Strom), das Wasserschallsignal, umzuwandeln. Überdies sind die Schallwandler ausgebildet, ein anliegendes elektrisches Signal (Wasserschallsignal) in Wasserschall umzuwandeln. Die Schallwandler können demnach als Wasserschallempfänger und/oder als Wasserschallsender verwendet werden. Die Schallwandler sind nicht für medizinische Anwendungen verwendbar. Als Empfindlichkeit des Schallwandlers wird das Verhältnis von Schallintensität zum resultierenden Ausgangssignal des Wasserschallwandlers (z.B. Ausgangsspannung) verstanden. Das Ausgangssignal des Wasserschallwandlers wird auch als Wasserschallsignal bezeichnet.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Bezugszeichenliste:

| | |
|---|---|
| 20 | Wasserschallwandler |
| 22 | Vielzahl von Wandlereinheiten |
| 24 | Elektroden |
| 26 | Basiselement |
| 28 | Strukturelement |
| 30 | Vergussmasse |
| 32 | Empfindlichkeitskurve |
| 34 | Pfeilrichtung |

| | |
|---|---|
| $S(t)$ | Wasserschallwellen |
| $x$ | (Mitten-) Abstand zwischen zwei Wandlereinheiten |
| $d$ | Wegstrecke für die Wasserschallwellen |
| $\alpha$ | Einfallswinkel |

**Patentansprüche**

1. Array (36) von Wasserschallwandlern mit einer Vielzahl von Wasserschallwandlern (20), wobei die Wasserschallwandler der Vielzahl von Wasserschallwandlern folgende Merkmale aufweisen:

   einer Vielzahl von Wandlereinheiten (22) die zweidimensional angeordnet sind,
   wobei die Wandlereinheiten (22) jeweils eine erste und eine zweite Kontaktfläche aufweisen;
   wobei die ersten Kontaktflächen der Wandlereinheiten (22) jeweils mit einer ersten Elektrode (24a) verbunden sind;
   wobei die zweiten Kontaktflächen der Wandlereinheiten (22) jeweils mit einer zweiten Elektrode (24b) verbunden sind;
   wobei die Wandlereinheiten (22) derart angeordnet sind, dass eine Einhüllende der ersten Kontaktflächen der Wandlereinheiten (22) kissenförmig ist;
   wobei die Kissenform eine in zwei Dimensionen gekrümmte Einhüllende ist, um eine Elevation des Wasserschallwandlers in beiden Dimensionen zu erzeugen;
   wobei die Wasserschallwandler der Vielzahl der Wasserschallwandlern (20) zu einem Vieleck angeordnet sind, um das Array zu bilden;
   wobei die erste Kontaktfläche jeweils nach außen gewandt ist und die zweiten Kontaktflächen jeweils zur Mitte des Vielecks zeigen, um durch die räumliche Anordnung der Wandlereinheiten zueinander eine im Wesentlichen konstante Empfindlichkeit des Arrays von Wasserschallwandlern über den vollständigen Azimut zu erhalten.

2. Array (20) gemäß Anspruch 1,

   wobei die Wandlereinheiten (22) auf einem Basiselement (26) angeordnet sind;
   wobei eine Oberseite des Basiselements, die in Richtung der Wandlereinheiten (22) zeigt, und eine der Oberseite gegenüberliegende Unterseite des Basiselements, und die Einhüllende, die gleiche Form aufweisen.

3. Array gemäß einem der vorherigen Ansprüche

   wobei die Kissenform $z_h(x)$ in einer ersten (z.B. horizontalen) Dimension ($x$) eine Kontur aufweist, die durch das Polynom

   $$z_h(x) = X_2 \cdot x^2 + X_4 \cdot x^4 + X_6 \cdot x^6 + X_8 \cdot x^8 + X_{10} \cdot x^{10} + X_{12} \cdot x^{12} + X_{14} \cdot x^{14} + X_{16} \cdot x^{16}.$$

   mit

   $$X_2 = -1,102248436127560E - 01$$

   $$X_4 = -7,798252809214000E + 04$$

   $$X_6 = 3,080405149858780E + 08$$

   $$X_8 = 4,015851040327540E + 11$$

   $$X_{10} = -4,977431310325020E + 15$$

   $$X_{12} = 2,614009340410490E + 18$$

   $$X_{14} = 2,687463597223600E + 22$$

   $$X_{16} = -3,790562133342640E + 25$$

und einer Toleranz von 0,001m, insbesondere 0,0005m oder insbesondere 0,0001m, begrenzt ist.

4. Array gemäß einem der vorherigen Ansprüche, wobei

die Kissenform $z_v(y)$ in einer zweiten (z.B. vertikalen) Dimension ($y$) eine Kontur aufweist, die durch das Polynom

$$z_v(y) = Y_2 \cdot y^2 + Y_4 \cdot y^4 + Y_6 \cdot y^6 + Y_8 \cdot y^8 + Y_{10} \cdot y^{10} + Y_{12} \cdot y^{12} + Y_{14} \cdot y^{14} + Y_{16} \cdot y^{16}.$$

mit

$Y_2$ = -15,6474404327660
$Y_4$ = 81025,7633563034
$Y_6$ = -1246494097,34679
$Y_8$ = 13481472680661,9

$$Y_{10} = -8{,}53691186195647e + 16$$

$$Y_{12} = 2{,}29508952803708e + 20$$

$$Y_{14} = -2{,}12497987038051E + 22$$

$$Y_{16} = -6{,}32568522314303E + 26$$

und einer Toleranz von 0,001m, bevorzugt 0,0005m, besonders bevorzugt 0,0001m begrenzt ist.

5. Array gemäß Anspruch 3 und 4,
wobei sich die Kissenform $z(x,y)$ aus der Superposition der Kissenform in der ersten Dimension $z_h(x)$ und der zweiten Dimension $z_v(y)$ ergibt.

6. Array gemäß einem der vorherigen Ansprüche,
wobei die Wandlereinheiten (22) den gleichen Abstand zwischen der ersten und der zweiten Kontaktfläche aufweisen.

7. Array gemäß einem der vorherigen Ansprüche,
wobei die Wandlereinheiten (22) eine Piezokeramik aufweisen, insbesondere wobei die Vielzahl der Wandlereinheiten (22) zu einer Piezokompositkeramik angeordnet sind.

8. Array gemäß einem der vorherigen Ansprüche,
wobei das Basiselement (26) ausgebildet ist, Schallwellen zu absorbieren.

9. Array gemäß einem der vorherigen Ansprüche,
wobei der Wasserschallwandler (20) einen Stapel mit folgenden Schichten aufweist: in einer ersten Schicht umfasst der Stapel ein Basiselement, in einer zweiten Schicht oberhalb einer Oberseite des Basiselements ist die zweite Elektrode (24b) angeordnet, in einer dritten Schicht oberhalb der zweiten Elektrode (24b) sind die Wandlereinheiten (22) zweidimensional angeordnet, in einer vierten Schicht oberhalb der Wandlereinheiten (22) ist die erste Elektrode (24a) angeordnet.

10. Array gemäß einem der vorherigen Ansprüche,
wobei die Wandlereinheiten (22) jeweils mit einem ersten Kontakt die erste Elektrode (24a) elektrisch kontaktieren und mit einem zweiten Kontakt die zweite Elektrode (24b) elektrisch kontaktieren.

11. Array gemäß einem der vorherigen Ansprüche,
wobei die Wandlereinheiten (22) äquidistant angeordnet sind und/oder eine Dichte von 40 bis 60 Wandlereinheiten (22) pro Quadratzentimeter aufweisen.

12. Array gemäß Anspruch 11, wobei separat von dem Vieleck der Wasserschallwandler (20) weitere Wasserschallwandler (20) gemäß einem der Ansprüche 1-11 angeordnet sind, wobei die weiteren Wasserschallwandler (20) in einem Winkel zwischen 20 Grad bis 50 Grad zu den Wasserschallwandlern des Vielecks angeordnet sind.

13. Verfahren zur Herstellung eines Arrays (36) von Wasserschallwandlern mit folgenden Schritten:

zweidimensionales Anordnen einer Vielzahl von Wandlereinheiten zu einem Wasserschallwandler (20), wobei die Wandlereinheiten (22) jeweils eine erste und eine zweite Kontaktfläche aufweisen;
Verbinden der ersten Kontaktflächen der Wandlereinheiten (22) jeweils mit einer ersten Elektrode;
Verbinden der zweiten Kontaktflächen der Wandlereinheiten (22) jeweils mit einer zweiten Elektrode;
wobei die Wandlereinheiten (22) derart angeordnet werden, dass eine Einhüllende der ersten Kontaktflächen der Wandlereinheiten (22) kissenförmig ist, wobei die Kissenform eine in zwei Dimensionen gekrümmte Einhüllende ist, um eine Elevation des Wasserschallwandlers in beiden Dimensionen zu erzeugen;
wobei eine Vielzahl von Wasserschallwandlern zu einem Vieleck angeordnet werden, um das Array zu bilden;
wobei die erste Kontaktfläche jeweils nach außen gewandt ist und die zweiten Kontaktflächen jeweils zur Mitte des Vielecks zeigen, um durch die räumliche Anordnung der Wandlereinheiten zueinander eine im Wesentlichen konstante Empfindlichkeit des Arrays von Wasserschallwandlern über den vollständigen Azimut zu erhalten.

**Claims**

1. An array (36) of waterborne sound transducers comprising a plurality of waterborne sound transducers (20), wherein the waterborne sound transducers of the plurality of waterborne sound transducers comprise the following features:

a plurality of transducer units (22) arranged in two dimensions, wherein the transducer units (22) each comprise a first and a second contact surface;
wherein the first contact surfaces of the transducer units (22) are each connected to a first electrode (24a);
wherein the second contact surfaces of the transducer units (22) are each connected to a second electrode (24b);
wherein the transducer units (22) are arranged such that an envelope of the first contact surfaces of the transducer units (22) is cushion-shaped;
wherein the cushion shape is an envelope curved in two dimensions to produce an elevation of the waterborne sound transducer in both dimensions;
wherein the waterborne sound transducers of the plurality of waterborne sound transducers (20) are arranged in a polygon to form the array;
wherein the first contact surfaces are each turned outward and the second contact surfaces are each turned towards the center of the polygon to obtain, by the spatial arrangement of the transducer units relative to each other, a substantially constant sensitivity of the array of waterborne sound transducers over the complete azimuth.

2. Array (20) according to claim 1,

wherein the transducer units (22) are arranged on a base element (26);
wherein an upper side of the base element facing the transducer units (22) and a lower side of the base element opposite the upper side, and the envelope have the same shape.

3. Array according to one of the previous claims

wherein the cushion shape in a first (e.g. horizontal) dimension has a contour which is bounded by the polynomial

$$z_h(x) = X_2 \cdot x^2 + X_4 \cdot x^4 + X_6 \cdot x^6 + X_8 \cdot x^8 + X_{10} \cdot x^{10} + X_{12} \cdot x^{12} + X_{14} \cdot x^{14} + X_{16} \cdot x^{16}.$$

with

$$X_2 = -1{,}102248436127560E - 01$$

$$X_4 = -7{,}798252809214000E + 04$$

$$X_6 = 3{,}080405149858780E + 08$$

$$X_8 = 4{,}015851040327540E + 11$$

$$X_{10} = -4{,}977431310325020E + 15$$

$$X_{12} = 2{,}614009340410490E + 18$$

$$X_{14} = 2{,}687463597223600E + 22$$

$$X_{16} = -3{,}790562133342640E + 25$$

and a tolerance of 0.001 m, in particular 0.0005 m or in particular 0.0001 m.

4. Array according to one of the previous claims, wherein

   the cushion shape in a second (e.g. vertical) dimension has a contour which is bounded by the polynomial

   $$z_v(y) = Y_2 \cdot y^2 + Y_4 \cdot y^4 + Y_6 \cdot y^6 + Y_8 \cdot y^8 + Y_{10} \cdot y^{10} + Y_{12} \cdot y^{12} + Y_{14} \cdot y^{14} + Y_{16} \cdot y^{16}.$$

   with

   $Y_2$ = -15,6474404327660
   $Y_4$ = 81025,7633563034
   $Y_6$ = -1246494097,34679
   $Y_8$ = 13481472680661,9

   $$Y_{10} = -8{,}53691186195647e + 16$$

   $$Y_{12} = 2{,}29508952803708e + 20$$

   $$Y_{14} = -2{,}124979870380510E + 22$$

   $$Y_{16} = -6{,}32568522314303E + 26$$

   and a tolerance of 0.001 m, preferably 0.0005 m, particularly preferably 0.0001 m.

5. Array according to claims 3 and 4,
   wherein the cushion shape results from the superposition of the cushion shape in the first dimension and the second dimension.

6. Array according to one of the previous claims,
   wherein the transducer units (22) have the same distance between the first and second contact surfaces.

7. Array according to one of the previous claims,
   wherein the transducer units (22) comprise a piezoelectric ceramic, in particular wherein the plurality of transducer units (22) are arranged to form a piezoelectric composite ceramic.

8. Array according to any of the previous claims,
   wherein the base element (26) is designed to absorb sound waves.

**9.** Array according to any of the previous claims,
wherein the waterborne sound transducer (20) comprises a stack with the following layers: in a first layer, the stack comprises a base element, in a second layer above an upper side of the base element, the second electrode (24b) is arranged, in a third layer above the second electrode (24b), the transducer units (22) are arranged two-dimensionally, in a fourth layer above the transducer units (22), the first electrode (24a) is arranged.

**10.** Array according to one of the previous claims,
wherein the transducer units (22) each electrically contact the first electrode (24a) with a first contact and electrically contact the second electrode (24b) with a second contact.

**11.** Array according to one of the previous claims,
wherein the transducer units (22) are arranged equidistantly and/or have a density of 40 to 60 transducer units (22) per square centimeter.

**12.** Array according to claim 11, wherein further waterborne sound transducers (20) according to one of claims 1-11 are arranged separately from the polygon of waterborne sound transducers (20), wherein the further waterborne sound transducers (20) are arranged at an angle between 20 degrees and 50 degrees to the waterborne sound transducers of the polygon.

**13.** Method for manufacturing an array (36) of waterborne sound transducers, comprising the following steps:

two-dimensional arrangement of a plurality of transducer units to form a waterborne sound transducer (20), wherein the transducer units (22) each have a first and a second contact surface;
connecting the first contact surfaces of the transducer units (22) each to a first electrode;
connecting the second contact surfaces of the transducer units (22) to a second electrode;
wherein the transducer units (22) are arranged such that an envelope of the first contact surfaces of the transducer units (22) is cushion-shaped, the cushion shape being an envelope curved in two dimensions to produce an elevation of the waterborne sound transducer in both dimensions;
wherein a plurality of waterborne sound transducers are arranged to form a polygon to form the array;
wherein the first contact surface is each turned outward and the second contact surfaces each face the centre of the polygon to obtain, by the spatial arrangement of the transducer units relative to each other, a substantially constant sensitivity of the array of waterborne sound transducers over the entire azimuth.

**Revendications**

**1.** Réseau (36) de transducteurs acoustiques subaquatiques comprenant une pluralité de transducteurs acoustiques subaquatiques (20), les transducteurs acoustiques subaquatiques de la pluralité de transducteurs acoustiques subaquatiques présentant les caractéristiques suivantes :

une pluralité d'unités de transducteurs (22) disposées en deux dimensions, les unités de transducteurs (22) présentant chacune une première et une deuxième surface de contact ;
les premières surfaces de contact des unités de transducteur (22) étant chacune reliées à une première électrode (24a) ;
les deuxièmes surfaces de contact des unités de transducteur (22) étant chacune reliées à une deuxième électrode (24b) ;
les unités de transducteur (22) étant disposées de telle sorte qu'une enveloppe des premières surfaces de contact des unités de transducteur (22) est en forme de coussin ;
la forme de coussin étant une enveloppe courbée dans deux dimensions afin de produire une élévation du transducteur acoustique dans les deux dimensions ;
les transducteurs acoustiques de la pluralité de transducteurs acoustiques (20) étant disposés en polygone pour former le réseau ;
la première surface de contact étant tournée vers l'extérieur et les deuxièmes surfaces de contact étant tournées vers le centre du polygone afin d'obtenir, grâce à la disposition spatiale des unités de transducteur les unes par rapport aux autres, une sensibilité sensiblement constante du réseau de transducteurs acoustiques dans l'azimut complet.

**2.** Réseau (20) selon la revendication 1,

dans lequel les unités de transducteur (22) sont disposées sur un élément de base (26) ;
dans lequel une face supérieure de l'élément de base, qui est tournée vers les unités de transducteur (22), et une face inférieure de l'élément de base, qui est opposée à la face supérieure, et l'enveloppe ont la même forme.

3. Réseau selon l'une des revendications précédentes

la forme de coussin dans une première dimension (par exemple horizontale) présente un contour qui est délimité par le polynôme

$$z_h(x) = X_2 \cdot x^2 + X_4 \cdot x^4 + X_6 \cdot x^6 + X_8 \cdot x^8 + X_{10} \cdot x^{10} + X_{12} \cdot x^{12} + X_{14} \cdot x^{14} + X_{16} \cdot x^{16}.$$

avec

$$X_2 = -1{,}102248436127560E - 01$$

$$X_4 = -7{,}798252809214000E + 04$$

$$X_6 = 3{,}080405149858780E + 08$$

$$X_8 = 4{,}015851040327540E + 11$$

$$X_{10} = -4{,}977431310325020E + 15$$

$$X_{12} = 2{,}614009340410490E + 18$$

$$X_{14} = 2{,}687463597223600E + 22$$

$$X_{16} = -3{,}790562133342640E + 25$$

et une tolérance de 0,001 m, en particulier 0,0005 m ou en particulier 0,0001 m.

4. Réseau selon l'une des revendications précédentes, dans lequel

la forme de coussin dans une deuxième dimension (par exemple verticale) présente un contour qui est délimité par le polynôme

$$z_v(y) = Y_2 \cdot y^2 + Y_4 \cdot y^4 + Y_6 \cdot y^6 + Y_8 \cdot y^8 + Y_{10} \cdot y^{10} + Y_{12} \cdot y^{12} + Y_{14} \cdot y^{14} + Y_{16} \cdot y^{16}.$$

avec

$Y_2$ = -15,6474404327660
$Y_4$ = 81025,7633563034
$Y_6$ = -1246494097,34679
$Y_8$ = 13481472680661,9

$$Y_{10} = -8{,}53691186195647e + 16$$

$$Y_{12} = 2{,}29508952803708e + 20$$

$$Y_{14} = -2{,}12497987038051E + 22$$

$$Y_{16} = -6{,}32568522314303E + 26$$

et une tolérance de 0,001 m, de préférence 0,0005 m, de préférence 0,0001 m.

5. Réseau selon les revendications 3 et 4,
la forme de coussin résultant de la superposition de la forme de coussin dans la première dimension et dans la deuxième dimension.

6. Réseau selon l'une des revendications précédentes,
les unités de conversion (22) présentant le même écart entre la première et la deuxième surface de contact.

7. Réseau selon l'une des revendications précédentes,
dans lequel les unités de transducteur (22) comportent une céramique piézoélectrique, en particulier dans lequel la pluralité d'unités de transducteur (22) sont agencées pour former une céramique piézoélectrique composite.

8. Réseau selon l'une des revendications précédentes,
dans lequel l'élément de base (26) est conçu pour absorber les ondes sonores.

9. Réseau selon l'une des revendications précédentes,
le transducteur acoustique (20) comportant un empilement comprenant les couches suivantes : dans une première couche, l'empilement comprend un élément de base, dans une deuxième couche au-dessus d'une face supérieure de l'élément de base, la deuxième électrode (24b) est disposée, dans une troisième couche au-dessus de la deuxième électrode (24b), les unités de transducteur (22) sont disposées de manière bidimensionnelle, dans une quatrième couche au-dessus des unités de conversion (22), la première électrode (24a) est disposée.

10. Réseau selon l'une des revendications précédentes,
les unités de conversion (22) étant chacune en contact électrique avec la première électrode (24a) par un premier contact et avec la deuxième électrode (24b) par un deuxième contact.

11. Réseau selon l'une des revendications précédentes,
les unités de conversion (22) étant disposées à égale distance les unes des autres et/ou présentant une densité de 40 à 60 unités de conversion (22) par centimètre carré.

12. Réseau selon la revendication 11, dans lequel d'autres transducteurs acoustiques (20) selon l'une des revendications 1 à 11 sont disposés séparément du polygone des transducteurs acoustiques (20), les autres transducteurs acoustiques (20) étant disposés selon un angle compris entre 20 et 50 degrés par rapport aux transducteurs acoustiques du polygone.

13. Procédé de fabrication d'un réseau (36) de transducteurs acoustiques dans l'eau, comprenant les étapes suivantes :

disposition bidimensionnelle d'une pluralité d'unités de transducteurs pour former un transducteur acoustique dans l'eau (20), les unités de transducteurs (22) présentant chacune une première et une deuxième surface de contact ;
connexion des premières surfaces de contact des unités de transducteurs (22) chacune à une première électrode ;
connexion des deuxièmes surfaces de contact des unités de transducteur (22) chacune à une deuxième électrode ;
les unités de transducteur (22) étant agencées de telle sorte qu'une enveloppe des premières surfaces de contact des unités de transducteur (22) soit en forme de coussin, la forme de coussin étant une enveloppe courbée dans deux dimensions afin de générer une élévation du transducteur acoustique dans les deux dimensions ;
une pluralité de transducteurs acoustiques étant disposés en polygone pour former le réseau ;
la première surface de contact étant tournée vers l'extérieur et les deuxièmes surfaces de contact étant tournées vers le centre du polygone afin d'obtenir, grâce à la disposition spatiale des unités de transducteur les unes par rapport aux autres, une sensibilité sensiblement constante du réseau de transducteurs acoustiques sur tout

l'azimut.

Fig. 1

a)

b)

Fig. 2

a) Horizontal/Azimut

b) Vertikal/Elevation

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016071961 A
- US 2006164919 A